# EUROPÄISCHE PATENTSCHRIFT

(11) **EP 2 317 155 B1**
(45) Veröffentlichungstag und Bekanntmachung des Hinweises auf die Patenterteilung: **13.03.2013**
(21) Anmeldenummer: 10177025.3
(22) Anmeldetag: 16.09.2010
(51) Int. Cl.: F16B 5/06, A01F 25/16

(54) **Siloverschluss**
Silo lock
Fermeture de silo

(30) Priorität: 28.10.2009 DE 202009014547 U
(43) Veröffentlichungstag der Anmeldung: 04.05.2011
(73) Patentinhaber: Seeger, Christian, 81476 München (DE)
(72) Erfinder: Seeger, Christian, 81476 München (DE)
(74) Vertreter: Alber, Norbert

(56) Entgegenhaltungen:
- DE-A1- 4 141 633
- DE-B- 1 066 382
- GB-A- 1 286 544
- GB-A- 2 138 882

## Beschreibung

### I. Anwendungsgebiet

Die Erfindung betrifft einen gasdichten Verschluss von Silos, beispielsweise Futtersilos im landwirtschaftlichen Bereich als Fahrsilos oder Rundsilos in Biogasanlagen oder ähnlichem.

Derartige Silos bestehen meist aus einem Boden sowie Wänden aus Beton, gegebenenfalls auch aus Stahl, und sollen nach dem Befüllen mit Material gasdicht verschlossen werden, um das Entweichen von CO₂ sowie das Eindringen von Luft zu verhindern.

### II. Technischer Hintergrund

Zu diesem Zweck ist es prinzipiell bereits bekannt, einen solchen gasdichten Siloverschluss dadurch herzustellen, dass in der Oberseite der umlaufenden Seitenwand ein nach oben offenes, hinterschnittenes, also sich nach unten erweiterndes, Halteprofil fixiert wird. Nach Auflegen des Randbereiches einer den Silo überspannenden Abdeckfolie in das Halteprofil wird ein Halteschlauch in das Halteprofil eingelegt und - meist mittels Druckluft - von innen mit Druck beaufschlagt (siehe z.B. DE-A-4 141 633).

Dadurch wird die Abdeckplane zwischen dem Halteprofil und dem Halteschlauch verklemmt und gasdicht gehalten.

Dabei kann es sich auch um zwei übereinander liegende Abdeckfolien handeln, vor allem dann, wenn dazwischen Luft ein geblasen wird, entweder um die obere Abdeckfolie prall zu halten oder damit diese Zwischenschicht aus Luft als zusätzliche Isolierung wirkt.

Mit zunehmender Größe der von den Abdeckfolien abzudeckenden Flächen steigen zum einen die auf den Siloverschlüssen wirkenden Kräfte.

Des Weiteren steigen auch die Anforderungen an den Dichtigkeitsfaktor des Siloverschlusses.

### III. Darstellung der Erfindung

### a) Technische Aufgabe

Es ist daher die Aufgabe der vorliegenden Erfindung, einen gattungsgemäßen Siloverschluss weiter zu verbessern in Hinblick auf höhere Rückhaltekraft und einfache Handhabbarkeit bei geringem Herstellungsaufwand und Herstellungskosten.

### b) Lösung der Aufgabe

Diese Aufgabe wird durch die Merkmale des Anspruches 1 gelöst. Vorteilhafte Ausführungsformen ergeben sich aus den Unteransprüchen.

Da der Zug an der Abdeckfolie immer in der Ebene der Abdeckfolie erfolgt, ist - für die maximale Rückhaltekraft des Siloverschlusses - die Größe der Haftreibung der aneinander anliegenden Flächen von Halteprofil und Abdeckfolie einerseits sowie Abdeckfolie und Halteschlauch andererseits von entscheidender Bedeutung.

Erfindungsgemäß wird vorgeschlagen, die Haftkraft durch Formschluss zu vergrößern.

Zum einen erfolgt dies dadurch, dass auf den Innenflächen des Halteprofils, an denen im Betrieb des Siloverschlusses die Abdeckfolie anliegt, Erhebungen und Vertiefungen vorhanden sind, die sich in die anliegende Außenseite der Abdeckfolie einpressen und die Haltekraft erhöhen.

Diese Erhebungen und Vertiefungen sind in den nach innen gerichteten Schrägflächen des trapezförmigen Halteprofils als auch an den nach innen gerichteten Biegungsflächen der frei enden Schenkel des Halteprofils angeordnet, dort von der Stelle der Öffnung des Halteprofils zur Mitte des Halteprofils hin, also wiederum in dem Bereich der Biegungsflächen, an denen im Betrieb des Siloverschlusses der Anpressdruck durch den Halteschlauch erfolgt.

Da ein Herausrutschen des Halteschlauches vor allem durch diese Biegungsflächen vor der geringsten Öffnungsweite des Halteprofils verhindert wird, ist hier die Anordnung von Erhebungen und Vertiefungen besonders effizient.

Im Übergangsbereich zwischen den Schrägflächen und den Biegungsflächen wird die Abdeckfolie dagegen in aller Regel in der Praxis nicht anliegen, so dass dort auf Erhebungen und Vertiefungen verzichtet werden kann.

Vorzugsweise sind ebenso auf der Außenfläche des Halteschlauches Erhebungen und Vertiefungen vorhanden, und zwar so gestaltet, dass sie insbesondere hinsichtlich Höhe, Abstand und/oder Form der Erhebungen und Vertiefungen formschlüssig mit denen auf den Innenseiten des Halteprofils zusammenwirken können.

Zwar ist zwischen beiden, also zwischen Halteprofil und Halteschlauch, die Abdeckfolie angeordnet, jedoch können die Erhebungen und Vertiefungen auch so dimensioniert sein, dass selbst eine glatte, nicht profilierte Abdeckfolie zwischen den wechselseitigen Erhebungen und Vertiefungen von Halteschlauch einerseits und Halteprofil anderseitig formschlüssig verquetscht wird.

In diesem Fall sollten zwei zueinander benachbarte Erhebungen mindestens einen Abstand entsprechend der Dicke der verwendeten Rückhaltefolie besitzen.

Eine andere Möglichkeit besteht darin, entsprechende Erhebungen und Vertiefungen, also insbesondere hinsichtlich Höhe, Abstand und/oder Form denen auf dem Halteschlauch und/oder dem Halteprofil entsprechend, auch auf der Außenseite, besser beiden Außenseiten, der Abdeckfolie anzuordnen.

Auf diese Art und Weise können die Profilierungen auf der Außenseite der Abdeckfolie direkt formschlüssig mit den Profilierungen auf der Innenseite des Halteprofils und/oder der Außenseite des Halteschlauches zusammenwirken.

Vorzugsweise verlaufen beim Halteprofil und beim Haltschlauch die Erhebungen und Vertiefungen dabei als linienförmige Grate und Nuten in Längsrichtung entlang des Profiles bzw. Schlauches.

Da es bei den Abdeckfolien jedoch meist keine definierte Längsrichtung gibt, wird bei der Abdeckfolie bevorzugt mit punktförmigen, beispielsweise kegelförmigen oder halbkugelförmigen, Erhebungen gearbeitet, die beispielsweise rasterartig in Form eines Rechtecks oder Rautenrasters über die gesamte Fläche der Abdeckfolie verteilt sind.

Solche punktförmigen Erhebungen auf der Abdeckfolie können unabhängig von der Orientierung der Abdeckfolie zur Längsrichtung von Halteschlauch und Halteprofil zwischen deren linienförmigen Erhebungen eingreifen und gehalten werden.

Im Falle von Erhebungen und Vertiefungen auch auf wenigstens einer der Außenseiten der Abdeckfolie soll die Abdeckfolie bevorzugt nicht mäanderförmig zwischen den Erhebungen und Vertiefungen von Halteprofil und Halteschlauch hindurchgeführt werden, sondern zwischen diesen gerade liegen, und lediglich mit ihren Erhebungen und Vertiefungen in deren Erhebungen und Vertiefungen eingreifen.

Zu diesem Zweck sind bei dieser Lösung die Erhebungen und Vertiefungen auf dem Halteschlauch und/oder dem Halteprofil und/oder der Abdeckfolie zwischen zwei benachbarten Erhebungen sehr viel geringer beabstandet, als es der Dicke der Abdeckfolie entspricht.

Um einen mäanderförmigen Verlauf der Abdeckfolie in diesem Fall gerade zu vermeiden, sollte dabei auch darauf geachtet werden, dass einer Erhebung auf der einen Seite der Abdeckfolie auf der gegenüberliegenden Seite gerade keine analoge Vertiefung gegenüberliegt, sondern auf der gegenüberliegenden Seite die Außenfläche der Abdeckfolie an dieser Stelle gerade eben durchgeht.

Eine andere Möglichkeit besteht darin, die Erhebungen auf den beiden Seiten der Abdeckfolie gerade an einander entsprechenden Stellen anzuordnen und ebenso die Vertiefungen, so dass ein Gegenüberliegen einer Erhebung und einer entsprechenden Vertiefung zuverlässig vermieden wird.

Um die dadurch verbesserte Haltekraft des Siloverschlusses auch aufnehmen zu können, muss das Halteprofil seinerseits besonders stabil im aufnehmenden Bauteil, also in der Regel der oberen Stirnfläche der Wand des meist aus Beton bestehenden Silos, verankert werden.

Zu diesem Zweck sind auf der Außenseite der frei endenden Schenkel des Halteprofils ebenfalls Haltevorsprünge ausgebildet, die der Verankerung im umgehenden Beton dienen.

Diese sind aufgrund ihrer Funktion mindestens um den Faktor 5, besser um den Faktor 10 hinsichtlich Höhe und Abstand größer dimensioniert als die Erhebungen auf der Innenseite für das Festhalten der Abdeckfolie.

Insbesondere sind entlang der Länge des frei endenden Schenkels nur drei bis fünf solcher Haltevorsprünge ausgebildet, die wiederum vorzugsweise als linienförmige Haltevorsprünge in Längsrichtung des Halteprofils durchgehend vorhanden sind oder auch als punktförmige Erhebungen in Längsrichtung vielfach hintereinander vorhanden sind.

Vorzugsweise weisen die Haltevorsprünge einen sich zu ihrem freien Ende hin erweiternden Querschnitt auf, um ein noch besseres Verkrallen im umgebenden Beton zu ermöglichen.

Der verwendete Halteschlauch wird in unbelastetem Zustand vorzugsweise einen kreisförmigen Querschnitt aufweisen, den er auch im belasteten Zustand in der Regel ohne umgebendes aufnehmendes Bauteil beibehält.

Der Halteschlauch besteht aus einem flexiblen, vorzugsweise auch etwas dehnbaren, Material. Dies ermöglicht es, einen Halteschlauch, dessen Querschnitt im unbelasteten Zustand größer ist als die freie Öffnung des Halteprofils, drucklos aufgrund seiner Verformbarkeit dennoch in das Halteprofil hineinzudrücken, und anschließend durch Druckbeaufschlagung sicher im Halteprofil - unter Zwischenlegen der Abdeckfolie - zu halten.

Zu diesem Zweck ist die Querschnittsfläche des Halteschlauches im belasteten Zustand nicht größer als 100%, insbesondere nicht größer als 120% der inneren freien Querschnittsfläche des Halteprofils, gemessen bis zur geringsten Öffnungsweite des Halteprofils.

Einen entscheidenden Einfluss auf die erzielbare Haltekraft haben auch die im Bereich der Öffnung des Halteprofils ins Innere der Öffnung hineinweisenden konvexen Biegungen am Ende der freien Schenkel des Halteprofils:
Diese sollten so dimensioniert sein, dass die freie Öffnung des Halteprofils höchstens 85%, besser höchstens 75% des geringsten Abstandes der inneren Schrägflächen des Halteprofils vor Beginn der Biegungen beträgt.
Gleichzeitig sollte der Krümmungsradius der Außenflächen der Biegungen mindestens das 1,1-fache, besser das 1,2-fache der Wandstärke des Halteprofils im Bereich der Biegung betragen, wobei das Halteprofil vorzugsweise - abgesehen von den Haltevorsprüngen - insgesamt eine gleichbleibende Wandstärke aufweist.

Der Innenwinkel zwischen den Schrägflächen des Halteprofils und dessen Bodenfläche beträgt für eine optimale Rückhaltung höchstens 75 Grad, besser höchstens 65 Grad.

Ebenso sollte der freie Innenraum auf der Außenseite der Biegungen am Ende der freien Schenkel mindestens der Wandstärke des Halteprofils in diesem Bereich entsprechen.

### c) Ausführungsbeispiele

Ausführungsformen gemäß der Erfindung sind im Folgenden beispielhaft näher beschrieben. Es zeigen:
- Fig. 1a:: einen erfindungsgemäß verschlossenen Silo im Querschnitt,
- Fig. 1b:: den Siloverschluss in vergrößerter Detaildarstellung,
- Fig. 2a:: das Halteprofil des Siloverschlusses in Einzeldarstellung,
- Fig. 2b:: eine vergrößerte Detaildarstellung eines Teilbereichs des Halte- profils mit Halteschlauch,
- Fig. 3:: vergrößerte Detaildarstellungen der verklemmten Abdeckfolie.

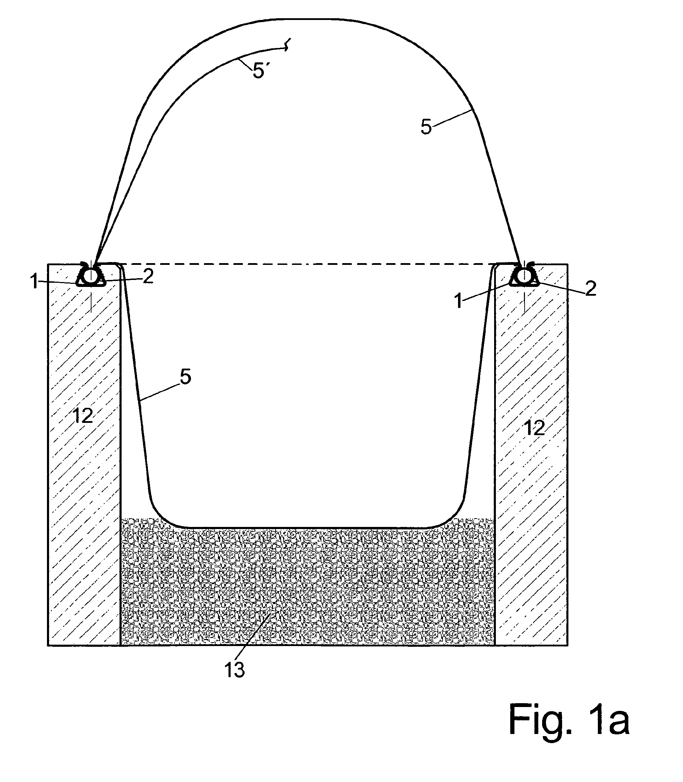

Fig. 1a zeigt die Anwendung eines erfindungsgemäßen Siloverschlusses an einem im Querschnitt dargestellten Fahrsilo oder Rundsilo:
Auf dem nicht mehr sichtbaren Boden des Silos wird die Silage 13 abgelagert, und ist allseitig von den vom Boden aufragenden Seitenwänden 12 eingefasst, die meist aus Beton bestehen. Auf der schmalen Oberseite 12a der Seitenwände ist das Halteprofil 1 mit der Öffnung nach oben eingelassen. Die offene Oberseite des Silos ist von einer Abdeckfolie 5 oder zwei übereinander liegenden Abdeckfolien 5, 5' abgedeckt, deren seitliche Ränder im Halteprofil 1 liegen und darin durch den unter Druck stehenden, im Halteprofil 1 liegenden, Halteschlauch 2 verquetscht ist.

Der Silo wird anfangs häufig bis über die Oberkante der Seite 12a der Seitenwände 12 hinaus angehäuft mit Silage 13 gefüllt, und dann mit der Abdeckfolie 5 abgedeckt, wodurch sich anfangs eine nach oben gewölbte Kuppelform der Abdeckfolie 5 ergibt, die durch entstehende Gase aus der Silage sogar noch etwas aufgebläht werden kann.

Mit der meist über den Winter erfolgenden zunehmenden Entnahme der Silage 13 aus dem Silo sinkt das Niveau der Silage im Silo und analog geht die auf der Silage im wesentlichen aufliegende Abdeckfolie 5 weiter nach unten, bis sie in den Silo hinein nach unten durchhängt, wie ebenfalls in Fig. 1a dargestellt wobei sich im Falle von zwei vorhandenen Abdeckfolien 5, 5' dabei um die untere 5' der beiden handelt.

Ziel ist es, die in der Silage entstehenden Gase, vor allem kohlenstoffhaltige Gase wie etwa CO₂, nicht aus dem Silo entweichen zu lassen, weshalb die Abdeckfolie 5 gasdicht ist, zumindest für die zurückzuhaltenden Gase nicht durchlässig ist, und auch die Verklemmung der Ränder der Abdeckfolie 5 im Halteprofil 1 gasdicht ist. Zu diesem Zweck wird der Silo auch an der Entnahmeöffnung nach dem teilweisen Entnehmen der Silage 13 immer wieder gasdicht verschlossen.

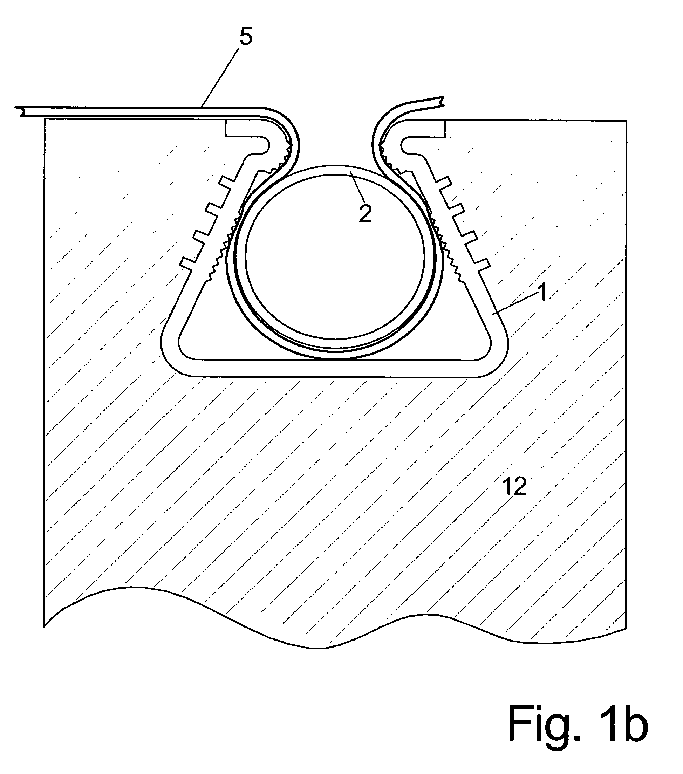

Fig. 1b zeigt einen vergrößerten Querschnitt durch den Siloverschluss gemäß Fig. 1a.

Dabei ist zu erkennen, dass sich der Halteschlauch 2 im aufgepumpten Zustand annähernd einem Kreisquerschnitt annähert, und deshalb an der umgebenden Abdeckfolie 5 und damit indirekt auch an dem umgebenden Halteprofil 1 nicht vollflächig anliegt, sondern im wesentlichen auf der Innenfläche des Bodens, also der langen parallelen Seite 3b des trapezförmigen Halteprofils 1, sowie an den Innenflächen der schräg verlaufenden, frei endenden Schenkel 14a, b sowie im unteren Bereich der Innenflächen der Biegungen 4a, b, in denen die frei endenden Schenkel 14 enden.

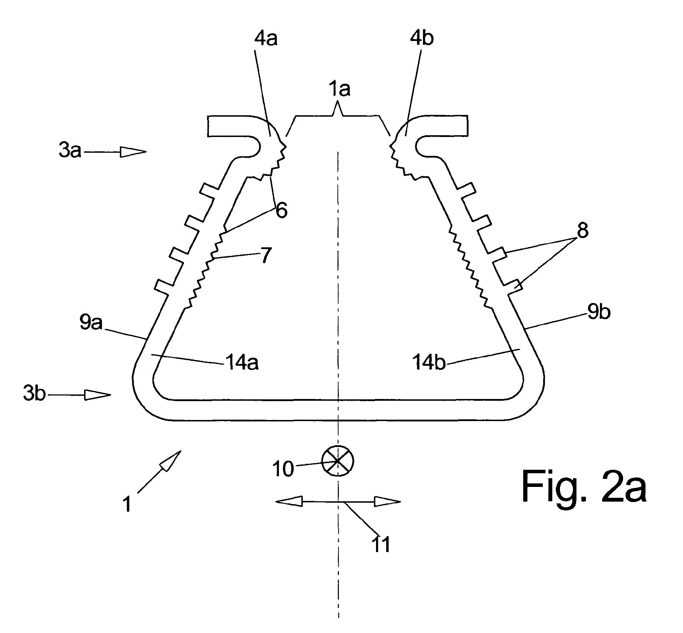

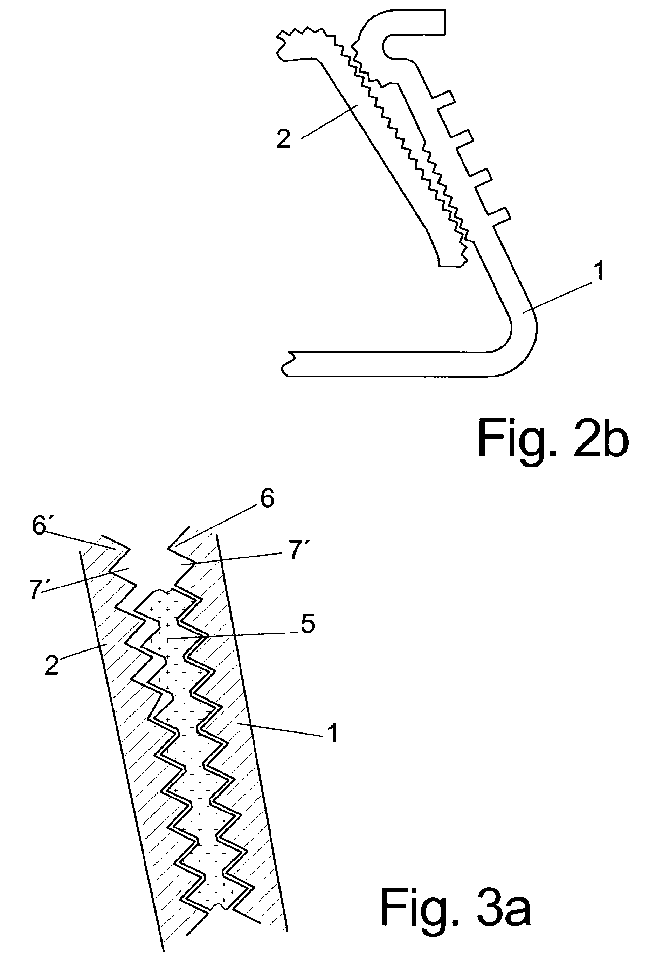

Fig. 2a zeigt das Halteprofil 1 im Querschnitt alleine, und in Fig. 2b in einer vergrößerten Detaildarstellung eines freien Schenkels 14a mit daran befindlicher Biegung 4a, wobei in Fig. 2b zusätzlich der diesen Innenseiten des Halteprofils 1 gegenüberliegende Teil eines Halteschlauches 2 dargestellt ist.

Die Fig. 2 lassen erkennen, dass auf den Innenseiten der freien Schenkel 14a, b zumindest in deren mittleren Längenbereich eine Profilierung in Form von nebeneinander liegenden, im Querschnitt zickzackförmigen Erhebungen 6 und Vertiefungen 7 aufgebracht ist, und ebenso auf der Innenseite der Biegungen 4a, b in der unteren Hälfte, also im Bereich unterhalb der freien Öffnung 1a des Halteprofils.

Eine analog gleiche Profilierung ist in Fig. 2b auf der Außenseite des Halteschlauches 2 und vorzugsweise über den Gesamtumfang des Halteschlauches 2 aufgebracht.

Dabei gehen diese Profilierungen, also Erhebungen 6, 6' und Vertiefungen 7, 7' vorzugsweise über die gesamte Länge 10 von Halteprofil 1 und Halteschlauch 2 durch und sind vorzugsweise als in Längsrichtung 10 dieser Gegenstände verlaufende linienförmige Erhebungen, also linienförmigen Grate und Nuten, ausgebildet.

Wie Fig. 2b zeigt, sind die Erhebungen 6 und Vertiefungen 7 nicht nur an der Biegung 4a und dem freien Schenkel 14a, sondern auch der Außenseite des Halteschlauches 2a gleich gestaltet hinsichtlich Höhe, Flankenneigung, Abstand usw., so dass diese Erhebungen und Vertiefungen des Halteschlauches 2 einerseits und des Halteprofils 1 andererseits verzahnungsartig ineinander greifen könnten.

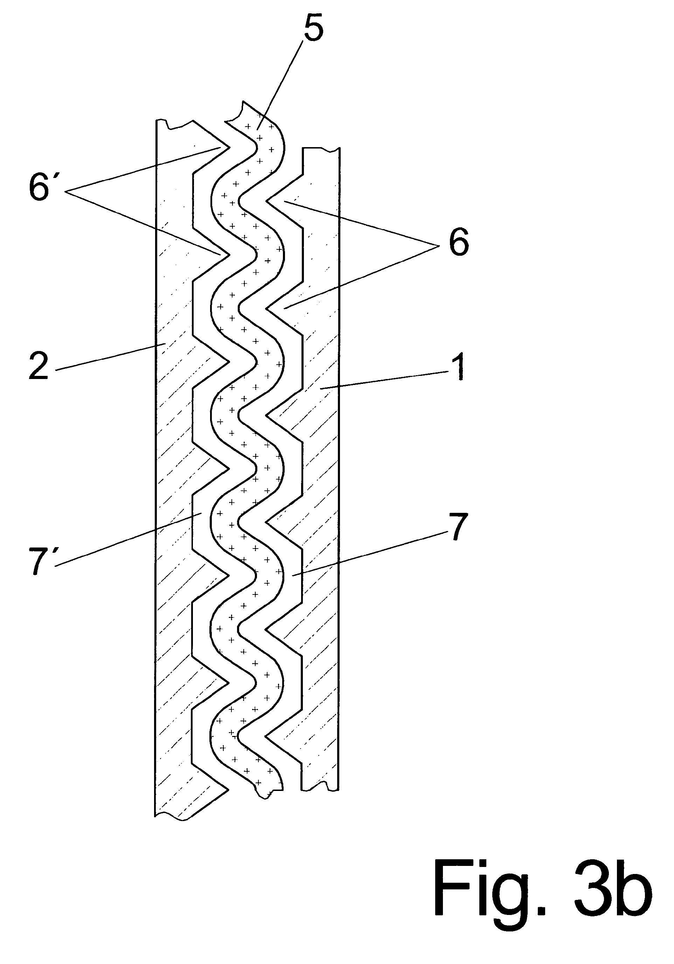

Allerdings ist dazwischen in der Praxis die Abdeckfolie 5 angeordnet, wie in den Fig. 3 dargestellt.

Die Abdeckfolie 5 besteht jedoch aus einem flexiblen und daher relativ weichen Material, gegenüber dem deutlich härteren Material beispielsweise des Halteprofils 1, welches aus hartem Kunststoff oder gar Metall, insbesondere Metall in Form eines gezogenen Profils, besteht, und bei dem die Erhebungen 6 einstückig zusammen mit dem Rest des Halteprofils 1 und insbesondere aus dem gleichen Material gebildet sind.

Die Erhebungen 6' auf der Außenseite des Halteschlauches 2 bestehen dabei vorzugsweise ebenfalls aus dem gleichen Material wie der Halteschlauch 2, der wie die Abdeckfolie 5 aus einem flexiblen und daher relativ weichen Material besteht, jedoch können die Erhebungen 6' auf der Außenseite des Halteschlauches 2 auch aus einem anderen, gegenüber dem Halteschlauch 2 wesentlich härteren Material hergestellt sein, insbesondere als separate äußere Schicht.

Vor allem wenn die Erhebungen 6, 6' auf dem Halteprofil 1 und/oder dem Halteschlauch 2 aus einem härteren Material als die Abdeckfolie 5 bestehen, graben sich diese aufgrund ihrer Härte bei entsprechendem Druck im Halteschlauch 2 formschlüssig in der elastischen Oberfläche der Abdeckfolie 5 ein, die im unbelasteten Zustand zwei parallel zueinander verlaufende ebene Außenseiten ohne Erhebungen und Vertiefungen aufweisen kann.

Dieser einfachste Fall ist in den Fig. 3 nicht dargestellt.

Die Außenseiten der Abdeckfolie 5 können jedoch ihrerseits ebenfalls Erhebungen und Vertiefungen aufweisen, wie in Fig. 3a dargestellt, und zwar solche, die hinsichtlich Höhe und/oder anderer Parameter mit den Erhebungen und Vertiefungen 6, 6', 7, 7' des Halteprofils 1 und des Halteschlauches 2 zusammenpassen und mit diesen formschlüssig ineinander greifen.

In diesem Fall sind auf den Außenflächen der Abdeckfolie vorzugsweise die Erhebungen immer auf einander entsprechenden gleichen Positionen der beiden Außenflächen angeordnet. Vorzugsweise handelt es sich dabei um punktförmige, also z.B. kegelförmige oder pyramidenförmige, Erhebungen, da es bei der Abdeckfolie 5 keine definierte Längsrichtung gibt, sondern diese Folie für einen bestimmten Silo meist individuell aus mehreren Bahnen zusammengeklebt und randseitig zugeschnitten wird.

Diese punktförmigen Erhebungen und Vertiefungen auf den Außenflächen der Abdeckfolie 5 greifen deshalb unabhängig von der Orientierung der Folie in die etwa gleich hohen Erhebungen und Vertiefungen 6'bzw. 7' der daran anliegenden Oberflächen von Halteschlauch 2 und Halteprofil 1 formschlüssig ein, und erhöhen die Belastbarkeit dieser Klemmverbindung, die immer nur in der Richtung der Ebene der Abdeckfolie 5 auf Zug belastet wird.

Fig. 3b zeigt eine demgegenüber andere Lösung: Dabei weisen wiederum nur das Halteprofil 1 und der Halteschlauch 2 an ihren gegeneinander gewandten Flächen Erhebungen 6' und Vertiefungen 7' auf, während die Abdeckfolie 5 ebene Außenflächen 9a, b ohne Erhebungen und Vertiefungen besitzt.

Allerdings sind auf dem Halteprofil 1 und dem Halteschlauch 2 die Erhebungen und Vertiefungen so dimensioniert und beabstandet, dass sie sich in die Oberfläche der Abdeckfolie 5 nicht mehr eingraben, sondern sich die Abdeckfolie 5 meanderförmig zwischen den Erhebungen und Vertiefungen des Halteprofils und des Halteschlauches hindurchwindet.

In diesem Fall können die Erhebungen 6, 6' und Vertiefungen 7, 7' vorzugsweise auch gerundet sein entsprechend dem maximal möglichen Biegeradius der verwendeten Abdeckfolie 5.

### BEZUGSZEICHENLISTE

- 1: Halteprofil
- 1a: Öffnung
- 2: Haltschlauch
- 3a, b: parallele Seiten
- 4a, b: Biegung
- 5: Abdeckfolie
- 6, 6': Erhebung
- 7, 7': Vertiefung
- 8: Haltevorsprung
- 8a: freies Ende
- 9a, b: Außenseite
- 10: Längsrichtung, Länge
- 11: Querrichtung
- 12: Seitenwand
- 12a: Oberseite
- 13: Silage
- 14a, b: freier Schenkel

## Patentansprüche

1. Siloverschluss mit
- einem trapezförmigen Halteprofil (1) und
- einem in dem Halteprofil (1) liegenden, aufpumpbaren Halteschlauch (2) zum Fixieren wenigstens einer dazwischenliegenden Abdeckfolie (5),
wobei
- das trapezförmige Halteprofil eine Öffnung (1a) in der kürzeren der beiden zueinander parallelen Seiten (3a, b) aufweist, die von zwei konvex zur Öffnung hin weisenden Biegungen (4a, b) der freien Schenkel (14a, b) des Halteprofils (1) begrenzt wird
**dadurch gekennzeichnet, dass**
sowohl an den nach innen gerichteten Schrägflächen der freien Schenkel (14a, b) als auch den nach innen gerichteten, konvexen Biegungsflächen der Biegungen (4a, b) von der Öffnung (1a) des Halteprofils Erhebungen und Vertiefungen vorhanden sind.

2. Siloverschluss nach Anspruch 1,
**dadurch gekennzeichnet, dass**
auf den Außenflächen des Halteschlauches Erhebungen (6') und Vertiefungen (7') vorhanden sind, die insbesondere hinsichtlich Höhe, Abstand und/oder Form mit denen auf den Innenseiten des Halteprofils (1) zusammenwirken können.

3. Siloverschluss nach einem der vorhergehenden Ansprüche,
**dadurch gekennzeichnet, dass**
es sich bei den Erhebungen (6) und Vertiefungen (7') des Halteprofils (1) und/oder des Halteschlauches (2) um in Längsrichtung (10) verlaufende linienförmige Nuten und Grate handelt.

4. Siloverschluss nach einem der vorhergehenden Ansprüche,
**dadurch gekennzeichnet, dass**
die Erhebungen (6, 6') und Vertiefungen (7, 7') über den gesamten Umfang und die gesamte Länge des Halteschlauches (2) vorhanden sind.

5. Siloverschluss nach einem der vorhergehenden Ansprüche,
**dadurch gekennzeichnet, dass**
die Erhebungen (6, 6') und Vertiefungen beim Halteprofil im mittleren Höhenbereich der schrägen Innenflächen der freien Schenkel (14a, b) und in der unteren Hälfte der konvexen, zur Öffnung hin gerichteten Biegung vorhanden sind.

6. Siloverschluss nach einem der vorhergehenden Ansprüche,
**dadurch gekennzeichnet, dass**
das Halteprofil auf den Außenseiten (7, 7') der Schrägflächen Haltevorsprünge (8) aufweist, die wenigstens um den Faktor 5, besser den Faktor 10, hinsichtlich Höhe und/oder Abstand größer dimensioniert sind als die Erhebungen (6) auf der Innenseite und insbesondere eine Rechteckform besitzen, insbesondere sich zu ihrem freien Ende (8a) hin verdicken.

7. Siloverschluss nach einem der vorhergehenden Ansprüche,
**dadurch gekennzeichnet, dass**
die Abdeckfolie (9) auf wenigstens einer ihrer Außenseiten, insbesondere auf beiden Außenseiten, Erhebungen und Vertiefungen aufweist, die hinsichtlich Höhe, Form und/oder Abstand mit den Erhebungen (6, 6') und Vertiefungen (7, 7') des Halteprofils und/oder des Halteschlauches formschlüssig zusammenwirken kann.

8. Siloverschluss nach Anspruch 7
**dadurch gekennzeichnet, dass**
die Erhebungen (6, 6') und Vertiefungen (7, 7') auf der Außenseite der Abdeckfolie (9) punktförmige Erhebungen, insbesondere in Form von halbrunden Noppen oder Kegeln mit runder Basisfläche, sind, die insbesondere rasterartig in einem Rechteck- oder Rautenraster angeordnet sind.

9. Siloverschluss nach einem der Ansprüche 7 oder 8
**dadurch gekennzeichnet, dass**
die Erhebungen (6, 6') und Vertiefungen (7, 7') in der Abdeckfolie keine umgekehrt analogen Erhebungen oder Vertiefungen auf der Gegenseite aufweisen, sondern vorzugsweise jeder Erhebung oder Vertiefung gegenüberliegend ein eben durchgehender Bereich der Außenfläche der Abdeckfolie gegenüber liegt.

10. Siloverschluss nach einem der vorhergehenden Ansprüche,
**dadurch gekennzeichnet, dass**
der Halteschlauch (2) im unbelasteten Zustand einen kreisförmigen Querschnitt aufweist und aus einem flexiblen, insbesondere dehnbaren Material besteht.

11. Siloverschluss nach einem der vorhergehenden Ansprüche,
**dadurch gekennzeichnet, dass**
der Halteschlauch (2) im unbelasteten Zustand einen Außendurchmesser aufweist, der größer ist als die freie Öffnung des Halteprofils, insbesondere größer als der geringste freie Abstand zwischen den beiden inneren Schrägflächen des Halteprofils.

12. Siloverschluss nach einem der vorhergehenden Ansprüche,
**dadurch gekennzeichnet, dass**
die freie Öffnung (1a) des Halteprofils (2) höchstens 85 %, besser höchstens 75 %, des geringsten Abstandes der inneren Schrägflächen des Halteprofils beträgt.

13. Siloverschluss nach einem der vorhergehenden Ansprüche,
**dadurch gekennzeichnet, dass**
der Innenwinkel zwischen den Schrägflächen und der Basisfläche des trapezförmigen Halteprofils höchstens 75 Grad, besser höchstens 65 Grad beträgt.

14. Siloverschluss nach einem der vorhergehenden Ansprüche,
**dadurch gekennzeichnet, dass**
der freie Innenraum auf der Außenseite der Biegung (4a,4b) de frei endenden schenkel (14a,14b) des Halteprofils mindestens der Wandstärke (11) des Halteprofils entspricht.

15. Siloverschluss nach einem der vorhergehenden Ansprüche,
**dadurch gekennzeichnet, dass**
das Halteprofil eine gleich bleibende Wandstärke (11) entlang seines Querschnittsverlaufs aufweist.

## Claims

1. A silo closure comprising
- a trapezoid support profile (1); and
- an inflatable support hose (2) arranged in the support profile (1) for fixating at least one cover foil (5) arranged there between,
- wherein the trapezoid support profile includes an opening (1a) in a shorter side of two sides (3a, b) arranged parallel to one another, wherein the opening is defined by two bends (4a, b) of the free arms (14a, b) of the support profile (1) which bends are oriented towards the opening in a convex manner,
- wherein protrusions and indentations are provided at the inward oriented slanted surfaces of the free arms (14a, b) and also at the inward oriented convex bent surfaces of the bends (4a, b) of the opening (1a) of the support profile.

2. The silo closure according to claim 1, wherein protrusions (6') and indentations (7') are provided on the outer surfaces of the support hose, which protrusions can interact with protrusions and indentations on insides of the support profile (1) in particular with respect to height, distance and/or form.

3. The silo closure according to one of the preceding claims, wherein the protrusions (6) and indentations (7') of the support profile (1) and/or the support hose (2) are linear grooves and ridges extending in longitudinal direction.

4. The silo closure according to one of the preceding claims, wherein the protrusions (6, 6') and indentations (7, 7') are provided over an entire circumference and an entire length of the support hose (2).

5. The silo closure according to one of the preceding claims, wherein the protrusions (6, 6') and indentations are provided at the support profile in an intermediate height portion of the slanted inner surfaces of the free arms (14a, b) and in the lower half of the convex bend that is oriented towards the opening.

6. The silo closure according to one of the preceding claims, wherein the support profile includes support protrusions (8) on outsides (7, 7') of the slanted surfaces, wherein the support protrusions (8) are sized larger than the protrusions (6) on the inside at least by a factor of (5), better by a factor of (10) with respect to height and/or distance and in particular have a rectangular shape, in particular thicken towards its free end (8a).

7. The silo closure according to one of the preceding claims, wherein the cover foil (9) includes protrusions and indentations at least on one of its outsides, in particular on both outsides which can interact in a form locking manner with respect to height, shape and/or distance with the protrusions (6, 6') and indentations (7, 7') of the support profile and/or of the support hose.

8. The silo closure according to claim 7, wherein the protrusions (6, 6') and the indentations (7, 7') on the outside of the cover foil (9) are punctiform protrusions, in particular configured as semispherical knobs or cones with a circular base surface which are in particular arranged in a rectangular or diamond shaped grid.

9. The silo closure according to one of the claims 7 or 8, wherein the protrusions (6, 6') and the indentations (7, 7') in the cover foil do not have any reverse analog protrusions or indentations on the opposite side, but preferably opposite to each protrusion or indentation there is a flat continuous portion of the outer surface of the cover foil.

10. The silo closure according to one of the preceding claims, wherein the support hose (2) has a circular cross-section in unloaded condition and is made from a flexible, in particular expandable material.

11. The silo closure according to one of the preceding claims, wherein the support hose (2) has an outer diameter in unloaded condition, wherein the outer diameter is greater than the free opening of the support profile, in particular greater than the smallest free distance between the two inner slanted surfaces of the support profile.

12. The silo closure according to one of the preceding claims, wherein the free opening (1a) of the support profile (2) has a size of 85% at the most, better 75% at the most of the smallest distance of the inner slanted surfaces of the support profile.

13. The silo closure according to one of the preceding claims, wherein the inner angle between the slanted surfaces and the base surface of the trapezoid support profile is 75° at the most, better 65° at the most.

14. The silo closure according to one of the preceding claims, wherein the free inner space on the outside of the bend (4a, b) of the free arms (14a, b) of the support profile corresponds at least to the wall thickness (11) of the support profile.

15. The silo closure according to one of the preceding claims, wherein the support profile has a continuous wall thickness (11) along its cross-section.

## Revendications

1. Fermeture de silo comprenant
- un profilé de retenue trapézoïdal (1) et
- un tuyau flexible de retenue (2) pompable se trouvant dans le profilé de retenue (1) pour la fixation d'au moins un film de recouvrement intercalé (5),
- le profilé de retenue trapézoïdal présentant une ouverture (1a) dans la face la plus courte des deux faces parallèles entre elles (3a, b) qui sont limitées par deux coudes (4a, b) convexes dirigés vers l'ouverture, des côtés libres (14a, b) du profilé de retenue (1),
**caractérisée en ce qu'**il est prévu des élévations et des cavités aussi bien sur les surfaces inclinées vers l'intérieur des côtés libres (14a, b) que sur les surfaces coudées convexes dirigées vers l'intérieur des coudes (4a, b) de l'ouverture (1a) du profilé de retenue.

2. Fermeture de silo selon la revendication 1,
**caractérisée en ce qu'**il est prévu sur les surfaces externes du tuyau flexible de retenue, des élévations (6') et des cavités (7') qui peuvent coopérer en particulier en termes de hauteur, de distance et/ou de forme avec celles se trouvant sur les faces internes du profilé de retenue (1).

3. Fermeture de silo selon l'une des revendications précédentes,
**caractérisée en ce que** les élévations (6) et les cavités (7') du profilé de retenu (1) et/ou du tuyau flexible de retenue (8) sont des nervures et des arêtes linéaires s'étendant dans la direction longitudinale (10).

4. Fermeture de silo selon l'une des revendications précédentes,
**caractérisée en ce que** les élévations (6, 6') et les cavités (7, 7') sont prévues sur l'ensemble de la périphérie et de la longueur du tuyau flexible de retenue (2).

5. Fermeture de silo selon l'une des revendications précédentes,
**caractérisée en ce que** les élévations (6, 6') et des cavités sont prévues sur le profilé de retenue dans la zone moyenne de hauteur des surfaces internes inclinées des côtés libres (14a, b) et dans la moitié inférieure du coude convexe dirigé vers l'ouverture.

6. Fermeture de silo selon l'une des revendications précédentes,
**caractérisée en ce que** le profilé de retenue présente, sur les faces externes (7, 7') des surfaces inclinées, des saillies de retenue (8) qui sont dimensionnées par rapport à la hauteur et/ou la distance au moins du facteur 5, de préférence du facteur 10 plus grandes que les élévations (6) sur la face interne et possèdent en particulier une forme rectangulaire, en particulier s'épaississent en direction de leur extrémité libre (8a).

7. Fermeture de silo selon l'une des revendications précédentes,
**caractérisée en ce que** le film de recouvrement (9) présente sur au moins une de ses faces extérieures, en particulier sur les deux faces extérieures, des élévations et des cavités qui peuvent coopérer par adhérence des formes en fonction de la hauteur, la forme et/ou la hauteur avec les élévations (6, 6') et cavités (7, 7') du profilé de retenue et/ou du tuyau flexible de retenue.

8. Fermeture de silo selon la revendication 7,
**caractérisée en ce que** les élévations (6, 6') et les cavités (7, 7') sont sur la face externe de la feuille de recouvrement (9) des élévations en forme de points, en particulier en forme de crampons en demi-cercle ou des cônes avec une surface de base ronde, qui sont disposés en particulier en forme de trame rectangulaire ou en losange.

9. Fermeture de silo selon l'une des revendications précédentes,
**caractérisée en ce que** les élévations (6, 6') et les cavités (7, 7') ne présentent dans le film de recouvrement aucune élévation ou cavité analogue inversée sur la face antagoniste, mais de préférence chaque élévation ou cavité opposée présente une zone plane continue de la surface externe du film de recouvrement.

10. Fermeture de silo selon l'une des revendications précédentes,
**caractérisée en ce que** le tuyau flexible de retenue (2) présente à l'état non chargé une section transversale circulaire et se compose de matériau flexible, en particulier extensible.

11. Fermeture de silo selon l'une des revendications précédentes,
**caractérisée en ce que** le tuyau flexible de retenue (2) présente à l'état non chargé un diamètre externe qui est plus grand que l'ouverture de profilé de retenue, en particulier plus grand que la distance libre minimale entre les deux surfaces inclinées internes du profilé de retenue.

12. Fermeture de silo selon l'une des revendications précédentes,
**caractérisée en ce que** l'ouverture libre (1a) du profilé de retenue (2) représente au maximum 85 % au mieux 75 % de la distance la plus faible des surfaces inclinées internes du profilé de retenue.

13. Fermeture de silo selon l'une des revendications précédentes,
**caractérisée en ce que** l'angle interne entre les surfaces inclinées et la surface de base du profilé de retenue trapézoïdal est de maximum 75 degrés, au mieux de maximum 65 degrés.

14. Fermeture de silo selon l'une des revendications précédentes,
**caractérisée en ce que** l'espace libre interne sur la face interne de la courbe (4a, 4b) des côtés libres d'extrémité (14a, 14b) du profilé de retenue correspond au moins à l'épaisseur de paroi (11) du profilé de retenue.

15. Fermeture de silo selon l'une des revendications précédentes,
**caractérisée en ce que** le profilé de retenue présente une épaisseur constante (11) le long de la courbe de sa section transversale.
